# EUROPÄISCHE PATENTSCHRIFT

(11) **EP 1 319 665 B1**
(45) Veröffentlichungstag und Bekanntmachung des Hinweises auf die Patenterteilung: **22.09.2004**
(21) Anmeldenummer: 02024896.9
(22) Anmeldetag: 08.11.2002
(51) Int. Cl.: C07F 17/00

(54) **Verfahren zur Hydrierung von ungesättigten Übergangsmetallverbindungen**
Process for the hydrogenation of unsaturated transition metal complexes
Procédé d'hydrogénation de complexes insaturés de métaux de transition

(30) Priorität: 11.12.2001 DE 10160635
(43) Veröffentlichungstag der Anmeldung: 18.06.2003
(73) Patentinhaber: Crompton GmbH, 59192 Bergkamen (DE)
(72) Erfinder: Giese, Burkhardt, 59394 Nordkirchen (DE); Lisowsky, Richard, Dr., 59174 Kamen (DE); Timmermann, Jan, 59368 Werne (DE); Wanke, Thomas, 59368 Werne (DE); Hüttenhofer, Mario, Dr., 78462 Konstanz (DE)

(56) Entgegenhaltungen:
- EP-A- 0 344 887
- US-A- 5 276 208
- US-A- 5 304 614
- US-A- 5 817 901
- US-A- 5 883 275
- US-A- 5 990 331
- US-A- 6 153 549
- US-B1- 6 209 856

## Beschreibung

Die Erfindung betrifft ein Verfahren zur Herstellung von hydrierten oder teilhydrierten Übergangsmetallverbindungen mit mono-, bi- oder polycyclischen Liganden durch Hydrierung der entsprechenden ungesättigten Übergangsmetallverbindung in einem statischen Mischer.

Übergangsmetallverbindungen gewinnen zunehmend an Bedeutung als essentieller Bestandteil einer neuen Generation von Katalysatorsystemen zur Herstellung von Polyolefinen ('Single Site Catalysts'). Diese neuen Katalysatoren bestehen im wesentlichen, wie bereits aus der klassischen Ziegler-Natta-Katalyse bekannt, aus einer Übergangsmetallverbindung als Katalysator, sowie einem Alkylaluminoxan als aluminiumorganische Cokatalysator-Komponente. Als Übergangsmetallverbindung werden beispielsweise bevorzugt Cyclopentadienyl-, Indenyl- oder Fluorenylderivate der Gruppe IVa des Periodensystems der chemischen Elemente eingesetzt.
Die erfindungsgemäß einsetzbaren Übergangsmetallverbindungen besitzen mono-, bi- oder polycyclische Liganden wie beispielsweise Indenyl oder Fluorenyl, die substituiert oder unsubstituiert sein können. Die Übergangsmetallverbindungen können als Alkylverbindungen, als Halogenidverbindungen, als Aryloder Alkarylverbindungen oder auch als Alkoxyverbindungen eingesetzt werden.
Solche Systeme besitzen im Gegensatz zu konventionellen Ziegler-Natta-Katalysatoren neben einer hohen Aktivität und Produktivität nicht nur die Fähigkeit zur gezielten Steuerung der Produkteigenschaften in Abhängigkeit von den eingesetzten Komponenten und den Reaktionsbedingungen, sondern eröffnen darüber hinaus den Zugang zu bislang unbekannten Polymerstrukturen mit vielversprechenden Eigenschaften im Hinblick auf technische Anwendungen.
Die mono-, bi- oder polycyclischen Übergangsmetallverbindungen weisen unterschiedliche Polymerisationsaktivität und Selektivität auf, je nachdem, ob der Polycyclus gesättigt oder ungesättigt ist. Die Hydrierung und die Aufarbeitung der Übergangsmetallverbindungen ist technisch teilweise aufwendig, die Umsatzraten unvollständig, die Ausbeuten sind oft niedrig und die Produkte entsprechend teuer.

In der Literatur werden bereits einige Möglichkeiten beschrieben, mono, bi- oder polycyclische Übergangsmetallverbindungen zu hydrieren (W. Kaminsky et al., Angew. Chem. 97 (1985), 507-508).

Diese Verfahren sind teilweise technisch aufwendig, da sie u.a. zu Beginn niedrige Reaktionstemperaturen bzw. mehrstufige Aufarbeitungsprozesse und dadurch bedingte Ausbeuteverluste beinhalten oder die für eine hohe Katalysatoraktivität relevante Reinheit des hydrierten Übergangsmetallderivates oftmals nicht erreicht werden kann.

Aufgabe der vorliegenden Erfindung war es daher, diese Nachteile des Standes der Technik zu überwinden und ein einfaches und effizientes Verfahren zur Hydrierung von mono-, bi- oder polycyclischen Übergangsmetallverbindungen bereitzustellen.

Gegenstand der Erfindung ist ein Verfahren zur Herstellung von hydrierten oder teilhydrierten Übergangsmetallverbindungen mit mono-, bi- oder polycyclischen Liganden, welches dadurch gekennzeichnet ist, dass die ungesättigte Übergangsmetallverbindung mit mono-, bi- oder polycyclische Liganden mit Wasserstoff unter kontinuierlicher oder einmaliger Druckaufgabe in einen statischen Mischer in Gegenwart eines geeigneten Lösungsvermittlers und eines Katalysators zugegeben werden. Die kontinuierliche Wasserstoffzugabe kann auch unter Rückführung von nicht umgesetzten Wasserstoff in den Kreislauf erfolgen.

Weitere Gegenstände der Erfindung werden durch die Ansprüche gekennzeichnet.

Erfindungsgemäß wird ein Verfahren zur Herstellung bevorzugt, bei welchem Wasserstoff zu einer Lösung oder einer Suspension von ungesättigten mono-, bi- oder polycyclischen Übergangsmetallverbindung in einem aliphatischen, cycloaliphatischen oder aromatischen Kohlenwasserstoff, gegebenenfalls halogenierten Kohlenwasserstoff, über eine Mischdüse in einen statischen Mischer, vorzugsweise ein Strömungsrohr mit Partialstromrückführung, dosiert wird (K. Hübner, Chemie-Technik 6 (1987), 87-92). Im Rahmen dieser Erfindung fallen unter den Begriff Lösungsvermittler Verdünnungsmittel, die sowohl zu einer Lösung wie auch zu einer Suspension führen.

### Kurze Beschreibung der Figuren

Figur 1 zeigt eine schematische Abbildung eines Strömungsrohres mit Partialstromrückführung.
Figur 2 zeigt eine schematische Abbildung eines Fluidstrahl-Gasverdichters.
Figur 3 zeigt eine schematische Abbildung eines Venturi-Mischers.

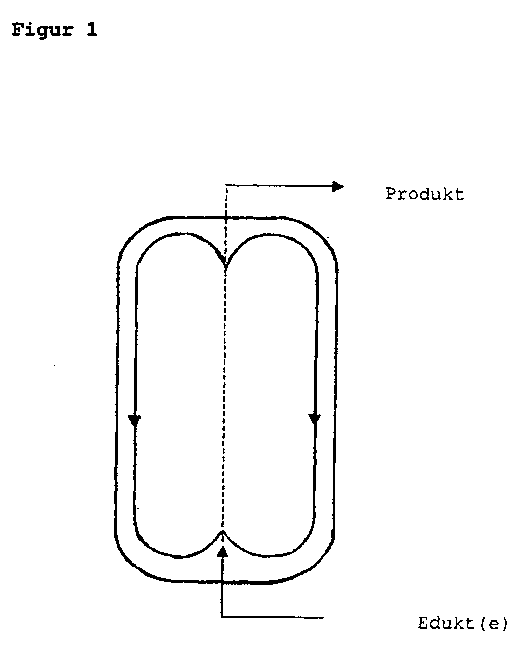

Die Funktionsweise des Strömungsrohres mit Partialstromrückführung (Figur 1), wie er beispielsweise in DE-A-25 16 284 beschrieben wird, beruht auf einem Flüssigkeitstreibstrahl im Innenrohr, der dem gesamten Reaktorinhalt einen Impuls überträgt und damit eine hohe Umlaufströmung erzeugt. Hierdurch ist der Flüssigkeitsumlaufstrom im Reaktor ca. 8 bis 10fach höher als der Treibstrahlvolumenstrom.

In dem erfindungsgemäßen Verfahren wird in einem Volumenstromverhältnis von 1 : 2000 bis 1 : 40'000, vorzugsweise 5000 - 20'000, über die Ein- oder Mehrkomponentenmischdüse Wasserstoff zu einer Suspension oder Lösung der ungesättigten mono-, bi- oder polycyclischen Übergangsmetallverbindung in den Reaktor dosiert.

Das Strömungsrohr mit Partialstromrückführung sorgt wegen der hohen Umlaufströmung für eine gute und extrem schnelle Vermischung der oben genannten Suspension oder Lösung mit dem Wasserstoff (Figur 1).

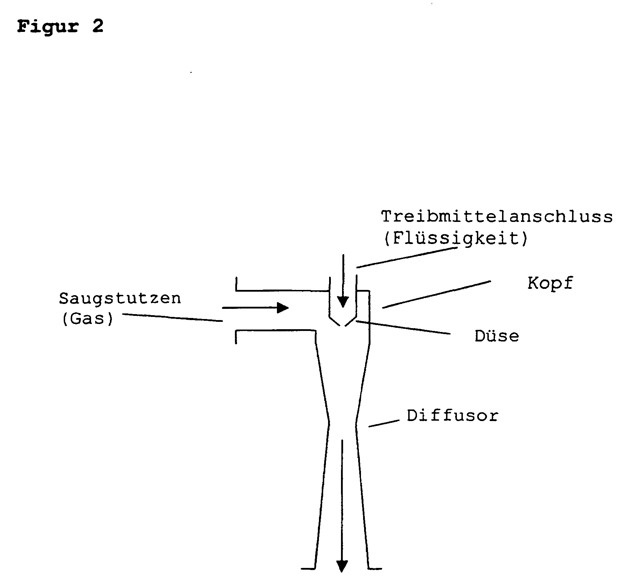

Die Funktionsweise des Fluidstrahl-Gasverdichters, laut beispielhaftem Hersteller Fa. GEA auch Flüssigkeitsstrahlverdichter genannt, (Figur 2), beruht auf einem in einem Rohr nach Düsenaustritt aufbrechenden Flüssigkeitstreibstrahl, der durch die entstehenden Flüssigkeitstropfen die umgebende Gasphase mitreißt und so eine hohe Durchmischung erzeugt.

In dem erfindungsgemäßen Verfahren wird der Volumenstrom der Lösung oder Suspension der Übergangsmetallverbindung mit dem Katalysator mit Hilfe einer Pumpe im Kreislauf durch den Fluidstrahl-Gasverdichter gepumpt, wodurch der Wasserstoff angesaugt und feinst vermischt wird.

Der Fluidstrahl-Gasverdichter sorgt wegen der hohen Umlaufströmung und dem Aufbrechen des Flüssigkeitsstrahls für eine gute und extrem schnelle Vermischung der oben angegebenen Suspension oder Lösung der ungesättigten mono-, bi- oder polycyclischen Übergangsmetallverbindung mit dem Wasserstoff (Figur 2).

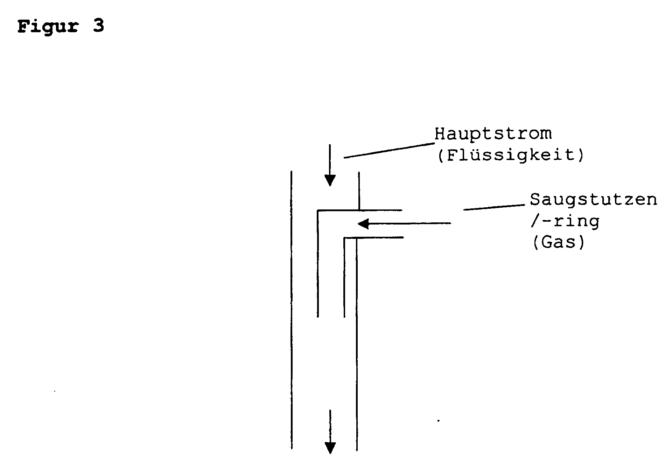

Die Funktionsweise des Venturi-Mischers (Figur 3), beruht auf einem in einem von Flüssigkeit durchströmten Rohr, in das der Wasserstoffgasstrom hineingesaugt wird. Durch die hohe Strömung wird der Wasserstoff fein verteilt und so eine hohe Gasdurchmischung erzeugt.

In dem erfindungsgemäßen Verfahren wird der Volumenstrom der Lösung oder der Suspension der Übergangsmetallverbindung mit dem Katalysator mit Hilfe einer Pumpe im Kreislauf durch den Venturi-Mischer gepumpt, wodurch der Wasserstoff angesaugt und vermischt wird.

Der Venturi-Mischer sorgt wegen der hohen Umlaufströmung und guten Dispergierung des Wasserstoffes für eine gute und extrem schnelle Vermischung der Lösung oder Suspension der ungesättigten mono-, bi- oder polycyclischen Übergangsmetallverbindung mit dem Wasserstoff (Figur 3).

Die erfindungsgemäßen Verfahren ermöglichen die Herstellung von hydrierten oder teilhydrierten Übergangsmetallverbindungen mit nahezu quantitativen Ausbeuten, ohne technisch aufwendige Verfahrensschritte. In diesem Zusammenhang werden unter hydrierten Übergangsmetallverbindungen solche verstanden, die neben den Doppelbindungen in der Cyclopentadienylstruktur keine weiteren C-C Doppelbindungen aufweisen, während unter die teilhydrierten Übergansmetallverbindungen solche fallen, die neben den Doppelbindungen in der Cyclopentadienylstruktur mindestens eine weitere C-C Doppelbindung aufweisen.

Nach den erfindungsgemäßen Verfahren können ungesättigte mono-, bi- oder polycyclische Übergangsmetallverbindungen eingesetzt werden. Bevorzugt werden als Übergangsmetallverbindungen Indenyl- oder Fluorenylderivate der Gruppe IVa des Periodensystems der chemischen Elemente eingesetzt. Bevorzugt werden als zu hydrierende Übergangsmetallverbindungen Zirkonium-, Hafnium- oder Titanmetallkomplexe eingesetzt.

Besonders bevorzugt werden als ungesättigte Übergangsmetallverbindungen Halogenide, Aryl-, Alkaryl-, Alkoxy- oder Alkylkomplexe verwendet, die verbrückt oder unverbrückt sein können.
Weiterhin besonders bevorzugt sind verbrückte Übergangsmetallverbindungen, die als Halogenide oder Alkylkomplexe eingesetzt werden.
Bevorzugt aber nicht einschränkend ist weiterhin, dass als Brückenglied in den eingesetzten Übergangsmetallverbindungen 1,2-Ethylen-, Si,Si-Dimethylsilyl- oder 1,1-Dimethyl-methylengruppen vorliegen.

Als Katalysatoren können im erfindunggemäßen Verfahren üblicherweise bei der Hydrierung eingesetzte Katalysatoren wie beispielsweise Pt-, Pd-, Ru- oder Rh-Katalysatoren verwendet werden. Bevorzugt wird Platinkatalysator verwendet(als Oxid oder Oxidhydrat, teilweise auch geträgert auf Trägermaterialien wie Aktivkohle, Silica, usw.).

Aufgrund gezielt einstellbarer Parameter und reproduzierbarer Verfahrensbedingungen weisen diese nach dem erfindungsgemäßen Verfahren hergestellten hydrierten oder teilhydrierten mono-, bi- oder polycyclischen Übergangsmetallverbindungen, die Teil der vorliegenden Erfindung sind, hohe Aktivitäten als Katalysatoren auf und sind somit hervorragend geeignet für die weitere Herstellung von Katalysator-Systemen für die Olefinpolymerisation.

Im folgenden wird die Erfindung anhand von Beispielen näher erläutert.

Die nachfolgenden Beispiele geben das allgemeine Anwendungsgebiet der vorliegenden Erfindung wieder und sind nicht einschränkend zu verstehen.

Prozentangaben sind, soweit nicht anders angeben, als Massenprozente zu verstehen.

### Beispiele

### Beispiel 1 (Strömungsrohr mit Partialstromrückführung)

Hydrierung von 1,2-Ethylen-bis[indenyl]zirkoniumdichlorid zu 1,2-Ethylen-bis[tetrahydroindenyl]zirkoniumdichlorid nach dem erfindungsgemäßen Verfahren in einem Strömungsrohr mit Partialstromrückführung.

| | |
|---|---|
| Temperatur | 40 °C |
| Druck | 2-3 bar |
| Volumenstrom H₂ | 600-700 [NL/h] |
| Reaktionsdauer | 46 min |
| Einsatz | 5 kg Dichlormethan |
| | 250 g Übergangsmetallverbindung |
| | 5 g PtO₂·H₂O |
| | |
| Umsatz nach 46 min(NMR) | > 98 % |

### Durchführung:

Dichlormethan, Platinoxid-Hydrat und Übergangsmetallverbindung wurden in der Reaktoranlage suspendiert, vorgelegt und auf 40°C erwärmt. Nach Inbetriebnahme der Kreislaufpumpe wurde Wasserstoff in das Strömungsrohr mit Partialstromrückführung über die Dosierdüse eingebracht. Der Umsatz kann durch Laufproben per NMR-Spektroskopie verfolgt werden.

### Beispiel 2 (Fluidstrahl-Gasverdichter)

Hydrierung von 1,2-Ethylen-bis[indenyl]zirkoniumdichlorid zu 1,2-Ethylen-bis[tetrahydroindenyl]zirkoniumdichlorid nach dem erfindungsgemäßen Verfahren in einem Fluidstrahl-Gasverdichter.

| | |
|---|---|
| Temperatur | 40 °C |
| Druck | 2-3 bar |
| Volumenstrom H₂ | Einmalaufgabe |
| Reaktionsdauer | 210 min |
| Einsatz | 5 kg Dichlormethan |
| | 50 g Übergangsmetallverbindung |
| | 5 g PtO₂·H₂O |
| | |
| Umsatz (NMR)nach 210 min | >98% |

### Durchführung:

Dichlormethan, Platinoxid-Hydrat und Übergangsmetallverbindung wurden vorgelegt und auf 40°C erwärmt. Nach Inbetriebnahme der Kreislaufpumpe wurde Wasserstoff aufgedrückt. Der Umsatz kann durch Laufproben per NMR-Spektroskopie verfolgt werden.

### Beispiel 3 (Venturimischer)

Hydrierung von 1,2-Ethylen-bis[indenyl]zirkoniumdichlorid zu 1,2-Ethylen-bis[tetrahydroindenyl]zirkoniumdichlorid nach dem erfindungsgemäßen Verfahren in einem Venturimischer.

| | |
|---|---|
| Temperatur | 40 °C |
| Druck | 2-4 bar |
| Volumenstrom H₂ | Einmalaufgabe |
| Reaktionsdauer | 100 min |
| Einsatz | 5 kg Dichlormethan |
| | 50 g Übergansmetallverbindung |
| | 5 g PtO₂·H₂O |
| | |
| Umsatz (NMR) nach 100 min | 98% |

### Durchführung:

Dichlormethan, Platinoxid-Hydrat und Übergangsmetallverbindung wurden vorgelegt und auf 40°C erwärmt. Nach Inbetriebnahme der Kreislaufpumpe wurde Wasserstoff aufgedrückt. Der Umsatz kann durch Laufproben per NMR-Spektroskopie verfolgt werden.

### Vergleichsbeispiel 1 (Autoklav)

Hydrierung von 1,2-Ethylen-bis[indenyl]zirkoniumdichlorid zu 1,2-Ethylen-bis[tetrahydroindenyl]zirkoniumdichlorid in einem klassischen Druckreaktor (Autoklav)

| | |
|---|---|
| Temperatur | 50 °C |
| Druck | 100 bar |
| Reaktionsdauer | 1 Tag |
| Einsatz | 50 g Dichlormethan |
| | 2,5 g Übergangsmetallverbindung |
| | 0,050 g PtO₂·H₂O |
| | 0,050 g CaH₂ |
| | |
| Ausbeute | < 76 % |

### Durchführung:

Vorhydrierung des Katalysator erfolgte, in dem der Katalysator und eine Teilmenge des Dichlormethans in den Autklaven eingewogen wurden und mit Wassertstoff bei 10 bar vorhydriert wird. Anschließend erfolgt nach mehrmaliger Bestickung die Zugabe der Übergangsmetallverbindung und des restlichen Dichlormethans. Die Hydrierung wird bei 50°C und 100 bar 4h durchgeführt.
Eine Reaktionskontrolle während der Reaktion durch Laufproben ist nicht möglich.

## Patentansprüche

1. Verfahren zur Herstellung von Übergangsmetallverbindungen mit hydrierten oder teilhydrierten mono-, bi- oder polycyclischen Liganden, **dadurch gekennzeichnet, dass** die ungesättigte mono-, bi- oder polycyclische Übergangsmetallverbindung und Wasserstoff in einen statischen Mischer in Gegenwart eines geeigneten Lösungsvermittlers und eines Katalysators zugegeben werden.

2. Verfahren nach Anspruch 1, **dadurch gekennzeichnet, dass** der oder die zu hydrierenden Liganden der Übergangsmetallverbindung Indenyl- oder Fluorenylderivate darstellen.

3. Verfahren nach Anspruch 1 oder 2, **dadurch gekennzeichnet, dass** als Übergangsmetallverbindungen Halogenide, Aryl-, Alkaryl-, Alkoxy- oder Alkylkomplexe eingesetzt werden.

4. Verfahren nach einem der Ansprüche 1 bis 3, **dadurch gekennzeichnet, dass** verbrückte Übergangsmetallverbindungen als Halogenide oder Alkylkomplexe eingesetzt werden.

5. Verfahren nach Anspruch 3 oder 4, **dadurch gekennzeichnet, dass** als Brückenglied in den eingesetzten Übergangsmetallverbindungen 1,2-Ethylen-, Si,Si-Dimethylsilyl- oder 1,1-Dimethyl-methylengruppen vorliegen.

6. Verfahren nach einem der Ansprüche 1 bis 5, **dadurch gekennzeichnet, dass** der Wasserstoff einmalig, kontinuierlich oder rückgeführt dosiert werden kann.

7. Verfahren nach einem der Ansprüche 1 bis 6, **dadurch gekennzeichnet, dass** als statischer Mischer ein Strömungsrohr mit koaxialer Partialstromrückführung, ein Fluidstrahl-Gasverdichter oder ein Venturi-Mischer verwendet werden kann.

8. Verfahren nach einem der Ansprüche 1 bis 7, **dadurch gekennzeichnet, dass** die zu hydrierende Übergangsmetallverbindung als Lösung oder als Suspension in einem geeigneten Lösungsvermittler eingesetzt werden kann.

9. Verfahren nach Anspruch 8, **dadurch gekennzeichnet, dass** ein Kohlenwasserstoff oder ein Halogenkohlenwasserstoff als Lösungsvermittler verwendet wird.

10. Verfahren gemäß einem der vorstehenden Ansprüche, **dadurch gekennzeichnet, dass** als Katalysator ein Pt-, Pd-, Ru- oder Rh-Hydrierungskatalysator verwendet wird.

11. Verfahren gemäß einem der vorstehenden Ansprüche, **dadurch gekennzeichnet, dass** als zu hydrierende Übergangsmetallverbindung Zirkonium-, Hafnium- oder Titankomplexe verwendet werden.

12. Verfahren gemäß einem der vorstehenden Ansprüche, **dadurch gekennzeichnet, dass** als zu hydrierende Übergangsmetallverbindungen verbrückte Bisindenylübergangsmetallverbindungen eingesetzt werden, die als Übergangsmetall Zirkonium, Hafnium oder Titan enthalten und als Brückenglied 1,2-Ethylen-, Si,Si-Dimethylsilyl- oder 1,1-Dimethyl-methylengruppen enthalten.

## Claims

1. Process for preparing transition metal compounds having hydrogenated or partially hydrogenated monocyclic, bicyclic or polycyclic ligands, **characterized in that** the unsaturated monocyclic, bicyclic or polycyclic transition metal compound and hydrogen are introduced into a static mixer in the presence of a suitable solubilizer and a catalyst.

2. Process according to Claim 1, **characterized in that** the ligand or ligands to be hydrogenated on the transition metal compound are indenyl or fluorenyl derivatives.

3. Process according to Claim 1 or 2, **characterized in that** the transition metal compounds used are halides or aryl, alkaryl, alkoxy or alkyl complexes.

4. Process according to any of Claims 1 to 3, **characterized in that** bridged transition metal compounds are used as halides or alkyl complexes.

5. Process according to Claim 3 or 4, **characterized in that** 1,2-ethylene, Si,Si-dimethylsilyl or 1,1-dimethylmethylene groups are present as bridging units in the transition metal compounds used.

6. Process according to any of Claims 1 to 5, **characterized in that** the hydrogen can be introduced all at once, continuously or in recirculated form.

7. Process according to any of Claims 1 to 6, **characterized in that** the static mixer used is a flow tube with coaxial partial flow return, a liquid jet gas compressor or a Venturi mixer.

8. Process according to any of Claims 1 to 7, **characterized in that** the transition metal compound to be hydrogenated can be used as solution or as suspension in a suitable solubilizer.

9. Process according to Claim 8, **characterized in that** a hydrocarbon or a halogenated hydrocarbon is used as solubilizer.

10. Process according to any of the preceding claims, **characterized in that** the catalyst used is a Pt, Pd, Ru or Rh hydrogenation catalyst.

11. Process according to any of the preceding claims, **characterized in that** the transition metal compounds to be hydrogenated are zirconium, hafnium or titanium complexes.

12. Process according to any of the preceding claims, **characterized in that** the transition metal compounds to be hydrogenated are bridged bisindenyl transition metal compounds containing zirconium, hafnium or titanium as transition metal and a 1,2-ethylene, Si,Si-dimethylsilyl or 1,1-dimethylmethylene group as bridging unit.

## Revendications

1. Procédé de préparation de composés de métal de transition présentant des ligands mono-, di- ou polycycliques hydrogénés ou partiellement hydrogénés, **caractérisé en ce que** le composé de métal de transition mono, di- ou polycyclique insaturé et l'hydrogène sont ajoutés dans un mélangeur statique en présence d'un solubilisant approprié et d'un catalyseur.

2. Procédé selon la revendication 1, **caractérisé en ce que** le ou les ligand(s) à hydrogéner du composé de métal de transition représente(nt) des dérivés indényliques ou fluorényliques.

3. Procédé selon la revendication 1 ou 2, **caractérisé en ce qu'**on utilise en tant que composés de métal de transition des halogénures, des complexes aryliques, alkaryliques, alcoxylés ou alkyliques.

4. Procédé selon l'une quelconque des revendications 1 à 3, **caractérisé en ce que** des composés de métal de transition pontés sont utilisés en tant qu'halogénures ou complexes alkyliques.

5. Procédé selon la revendication 3 ou 4, **caractérisé en ce que** des groupements 1,2-éthylène, Si,Si-diméthylsilyle ou 1,1-diméthylméthylène sont présents dans les composés de métal de transition utilisés en tant qu'élément formant pont.

6. Procédé selon l'une quelconque des revendications 1 à 5, **caractérisé en ce que** l'hydrogène peut être dosé une fois, en continu ou après recyclage.

7. Procédé selon l'une quelconque des revendications 1 à 6, **caractérisé en ce qu'**on peut utiliser comme mélangeur statique un tube à écoulement continu avec recyclage coaxial de débit partiel, un compresseur à gaz à jet de fluide ou un mélangeur à venturi.

8. Procédé selon l'une quelconque des revendications 1 à 7, **caractérisé en ce qu'**on peut utiliser le composé de métal de transition à hydrogéner comme solution ou comme suspension dans un solubilisant approprié.

9. Procédé selon la revendication 8, **caractérisé en ce qu'**on utilise un hydrocarbure ou un hydrocarbure halogéné comme solubilisant.

10. Procédé selon l'une quelconque des revendications précédentes, **caractérisé en ce qu'**on utilise comme catalyseur un catalyseur de Pt, de Pd, de Ru ou de Rh.

11. Procédé selon l'une quelconque des revendications précédentes, **caractérisé en ce qu'**on utilise comme composé de métal de transition à hydrogéner des complexes de zirconium, d'hafnium ou de titane.

12. Procédé selon l'une quelconque des revendications précédentes, **caractérisé en ce qu'**on utilise comme composés de métal de transition à hydrogéner des composés bisindényliques de métal de transition pontés qui contiennent en tant que métal de transition du zirconium, du hafnium ou du titane et en tant qu'élément formant pont des groupements 1,2-éthylène, Si,Si-diméthylsilyle ou 1,1-diméthylméthylène.
